# EUROPEAN PATENT SPECIFICATION

(11) **EP 0 489 895 B1**
(45) Date of publication and mention of the grant of the patent: **20.03.2002**
(21) Application number: 91912355.4
(22) Date of filing: 02.07.1991
(51) Int. Cl.: C09K 19/38, C08F 20/30

(54) **LIQUID CRYSTAL POLYACRYLATES**
FLÜSSIGKRISTALLPOLYACRYLATE
POLYACRYLATES A CRISTAUX LIQUIDES

(30) Priority: 02.07.1990 GB 9014688
(43) Date of publication of application: 17.06.1992
(73) Proprietor: QinetiQ Limited, London, SW1 6TD (GB)
(72) Inventor: McDONNELL, Damien Gerard, Malvern, Worcester WR16 3PS (GB); BLACKMORE, Jennifer Margaret, Malvern, Worcester WR16 3PS (GB); COATES, David, Poole, Dorset BH15 1HX (GB); NARBOROUGH, Elizabeth, Poole, Dorset BH15 1HX (GB); VERRALL, Mark Andrew, Poole, Dorset BH15 1HX (GB)
(86) International application number: GB9101074
(87) International publication number: WO9200366

(56) References cited:
- EP-A- 0 188 785
- EP-A- 0 241 338
- EP-A- 0 293 870
- WO-A-90/00584
- FR-A- 2 632 648

## Description

This invention relates to a novel method for preparation of liquid crystal polyacrylates and to some novel liquid crystal polyacrylates prepared using this method.

Liquid crystal polyacrylates are a generally known type of liquid crystal polymer ("LCP"). LCP's are known and are used in the electro-optical device industry, for example in optical storage devices, in non-linear optical devices and in pyroelectric devices, see for example GB 2146787A and Makromol Chem (1985) 186 2639-47.

FR-A-2632648 discloses liquid crystal polyacrylate homo and co-polymers. EP-A-293870 discloses polyacrylate liquid crystal polymers,

One known type of LCP consists of a polymeric backbone to which are attached laterally pendant side chains which have a chemical structure that is mesogenic, i.e. that induces liquid crystalline character, these being known as side chain liquid crystal polymers. Work in this field has identified a large number of types of side chain structures which are suitable, see for example GB 2146787A. For some purposes it is desirable that the LCP shows a smectic C (Sc) or chiral smectic C (Sc*) liquid crystal phase, and a particularly preferred side chain for achieving this is one which contains laterally fluorinated biphenyl or terphenyl system.

In liquid crystal polyacrylates the backbone consists of a polyacrylate, eg polymethacrylate chain with pendant side chains, ie of general structure:

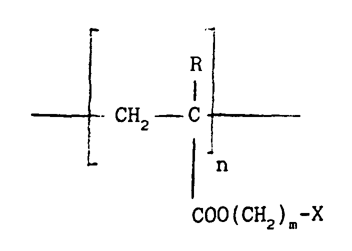

Where (CH₂)ₘ-X is the side chain and R is hydrogen or alkyl in the case of polyalkylacrylates, being methyl in polymethacrylates. Such liquid crystal polyacrylates are known, eg as described in Polymer Communications (1988) 24 364-365. In Makromol. Chem. Rapid Commun. (1984) 5 393-398 chloroacrylic liquid crystal polymers are described having a general structure: 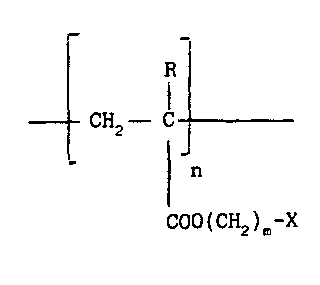 in which R is methyl or chlorine, the latter being said to favour Sc phases.

Synthesis of such liquid crystal polyacrylates has proven difficult, and there is a need for an improved method of synthesis. It is believed that these difficulties arise from the attachment of the spacer (CH₂)ₘ into the acrylate ester monomer of the polyacrylate too early in the synthesis, and the invention seeks to alleviate these difficulties in part at least by the provision of a novel method of attachment of such a spacer group into suitable acrylate ester monomers.

According to this invention liquid crystal polyacrylate homo or co-polymers having a repeat unit I are provided: 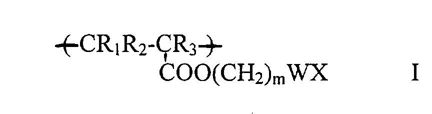 wherein R₁ and R₂ are independently alkyl or hydrogen; R₃ is alkyl, hydrogen or chlorine; m is 0 or an integer 1-20; W is a linkage group COO, OOC or O and X is a mesogenic group of formula IIIA: 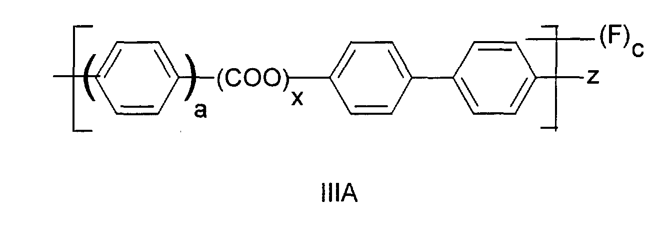 wherein a and x are independently 0 or 1; c is 1 to 4 and the fluorine substituents may occupy any of the substitution positions on the two or three rings and Z is -OR, -OOCR, -COOR where R is an alkyl group having up to 15 carbon atoms which contains an asymmetric centre;
provided that if a=0 then x=0.

According to a further aspect of this invention, a method for the preparation of liquid crystal polyacrylate polymers having a repeat unit I comprises polymerising acrylate ester monomers with a catalyst in a solvent under irradiation or heat conditions.

The acrylate ester is given by formula II:

R₁R₂C=CR₃COO(CH₂)ₘWX II

Wherein the definitions for R₁, R₂, R₃, W and X are defined by formulae I and IIIA.

The preferences expressed below are with respect inter alia to ease of preparation and usefulness in preparing liquid crystal polyacrylates by polymerisation of these acrylate esters.

Preferably R₁ and R₂ are hydrogen. Preferably R₃ is hydrogen, chlorine or methyl. Preferably m is 5-15, especially 10 or 11. Lower m values are believed to result in desirable higher clearing points.

Especially preferred structures for groups of formula IIIA are listed below:

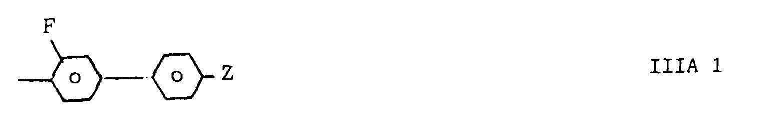

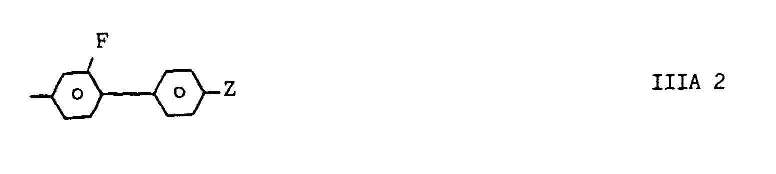

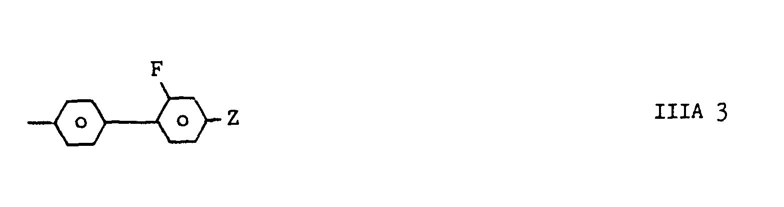

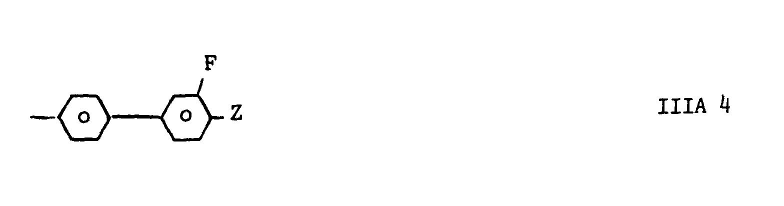

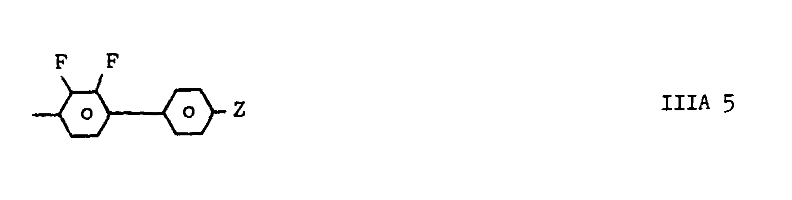

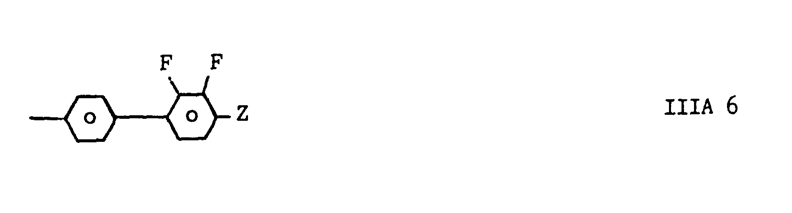

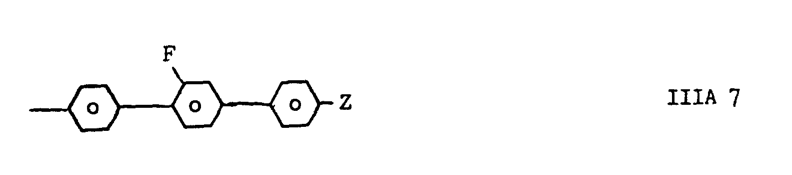

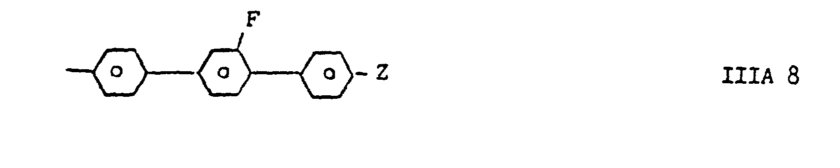

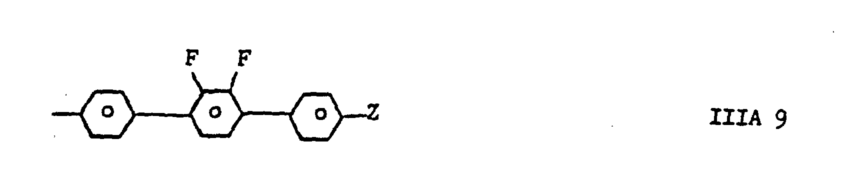

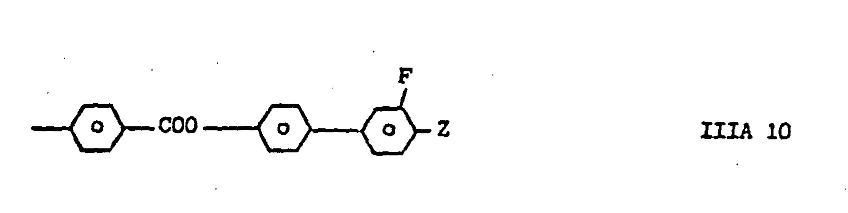

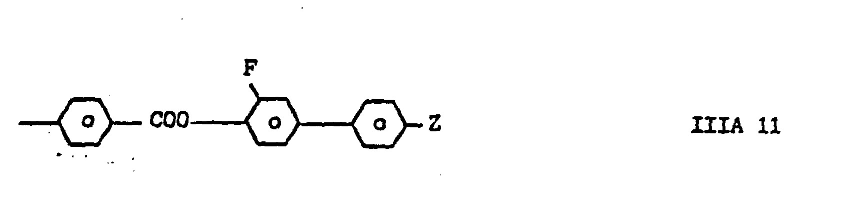

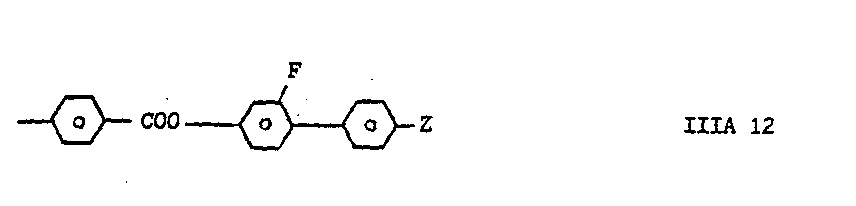

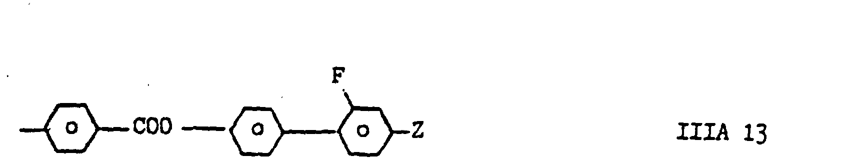

For the formation of Sc phases preferred groups Z in formula IIIA are C₃-C₁₂ -OR where R is n-alkyl. For Sc* phases -OR or -COOR, R is especially 2-methylalkyl such as 2-methylheptyl or:

R'(Me)C*HCOO- ;

or 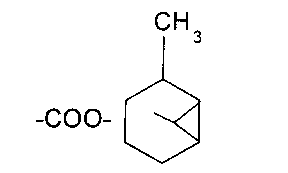 particularly with R' as ethyl groups are preferred for Z.

The polymerisation reaction may be carried out using known methods of preparing polyacrylates from acrylate ester monomers, but it is preferred to react the acrylate ester monomer with a catalyst azo-iso-butyronitrile (AIBN) in a solvent, preferably dichloroethane, toluene or especially dichloromethane , as it is believed the latter may lead to a higher molecular weight polymer product. Other free radical initiator catalysts may also be used in place of AIBN, and it may be useful to irradiate or heat the reaction mixture during the polymerisation reaction.

Acrylate esters of formula II above may be prepared by reacting a compound of formula IV:

Y-(CH₂)ₘ-COOX IV

where Y is bromine or iodine, with an acrylic acid sodium or potassium salt of formula:

R₁R₂C=CR₃COOM

where M is sodium or potassium.

It is preferred to carry out the reaction between the compound of formula IV and the acrylic acid salt at room temperature (ca. 20°C) in a suitable solvent, preferably hexamethyl phosphoramide (HMPA). The acrylate salt may itself be prepared by reaction of the corresponding acid R₁R₂C=CR₃COOH with the metal hydride MH, eg NaH in the same solvent, hydrogen being evolved. Preferably a 1.1 : 1.0 excess of the acid to the hydride is used.

In a preliminary synthetic stage, the compound of formula IV may be prepared by esterification of a suitable phenol HO-X, with an acid of formula Y-(CH₂)ₘ -COOH, eg in a solvent such as dichloromethane using trifluoroacetic anhydride (TFAA) as a catalyst. Phenols of formula HO-X are known or may be prepared by methods apparent to those skilled in the art, for example by treatment of known phenylboronic acids with hydrogen peroxide (see M F Hawthorne J Org Chem (1957) 22 1001). Examples of methods by which such boronic acids can be prepared are given in GB 8905422A.

The polyacrylate polymers having repeat unit I, in particular, those having a group X of formulae IIIA 1 - IIIA 13 are expected to be of particular value in providing Sc and/or Sc* liquid crystal polyacrylates. In such polyacrylates those in which R₃ is chlorine might be expected to show a greater tendency to form Sc phases than their counterparts with R₃ as hydrogen or alkyl.

The invention will now be illustrated by way of non-limiting examples.

Using the method outlined above the polyacrylate polymer: 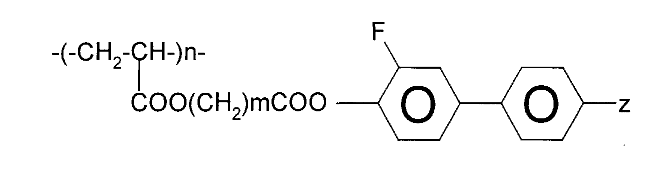 was prepared for a number of groups Z using the reactions:

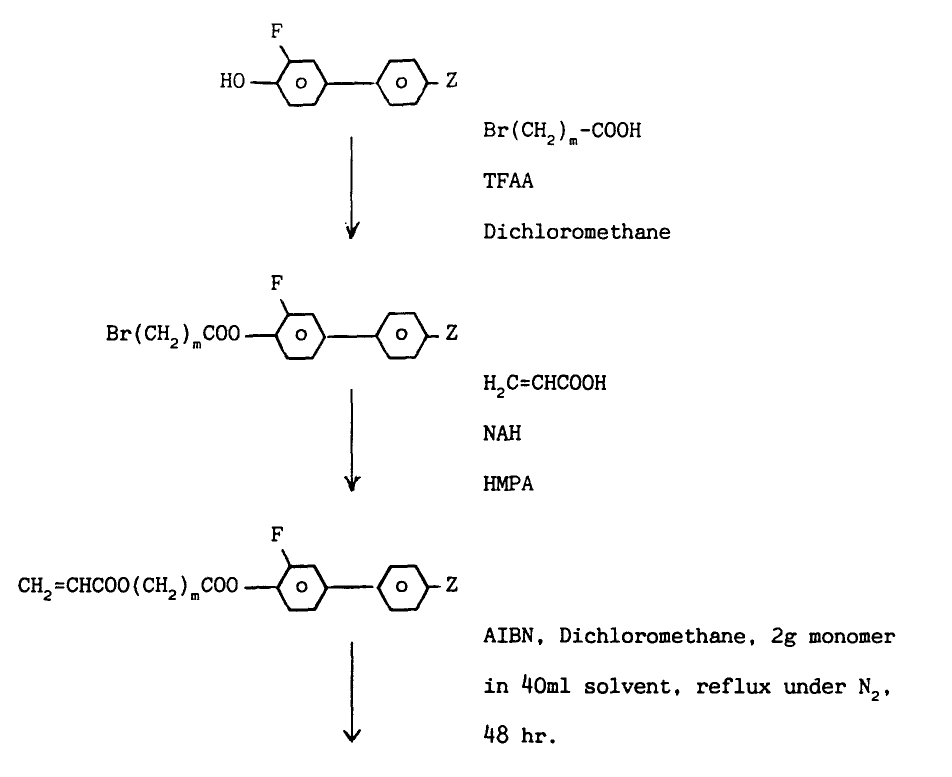

The following asymmetrically substituted fluorobiphenyl polyacrylates were synthesised. The differential scanning colorimetry (DSC) temperatures indicate phase transitions.

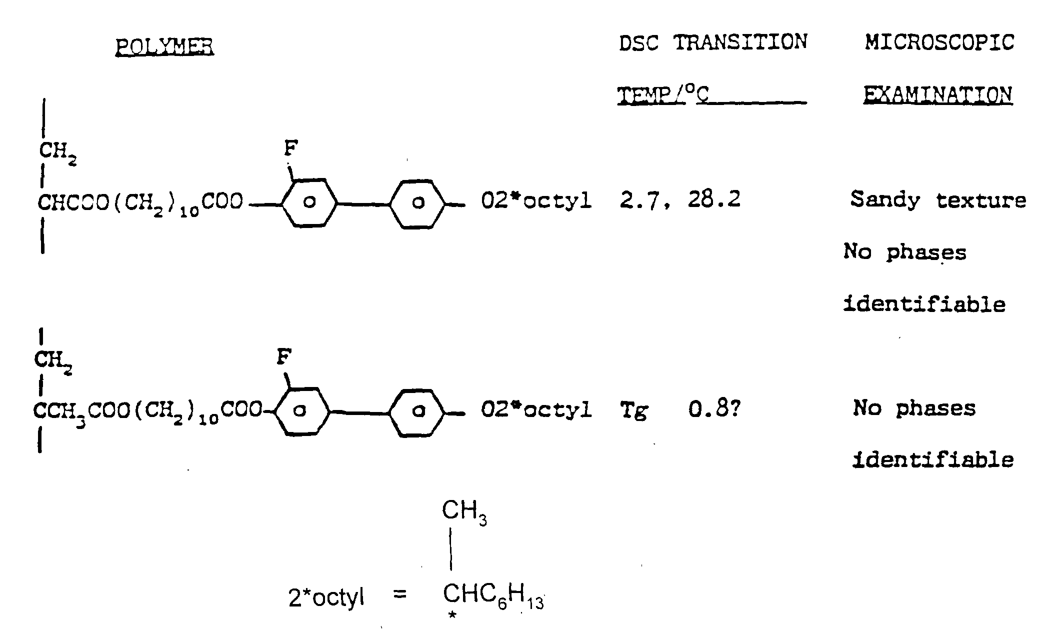

All of the polyacrylates prepared above were polymerised using dichloroethane as solvent which tends to produce polymer chains about 9-40 repeat units long.

The following polyacrylate polymers were also prepared using the method of this invention:

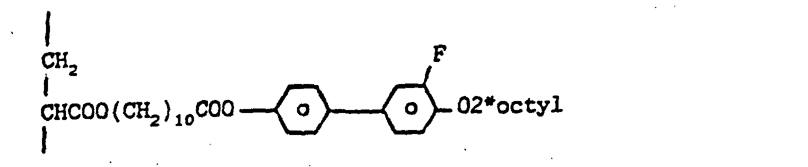

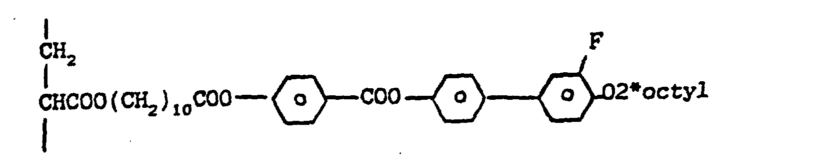

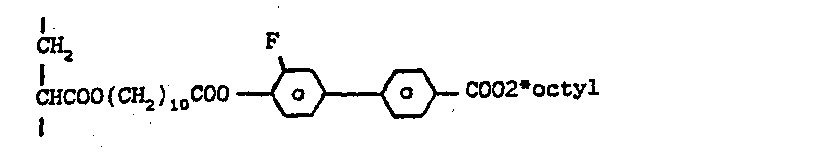

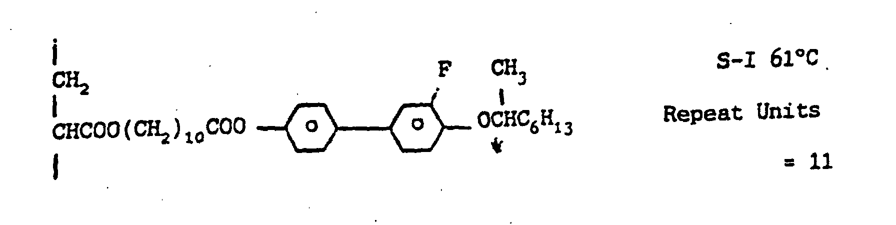

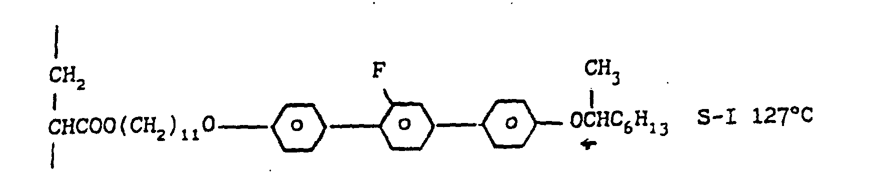

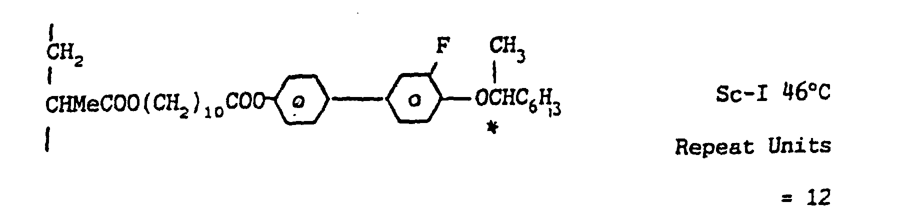

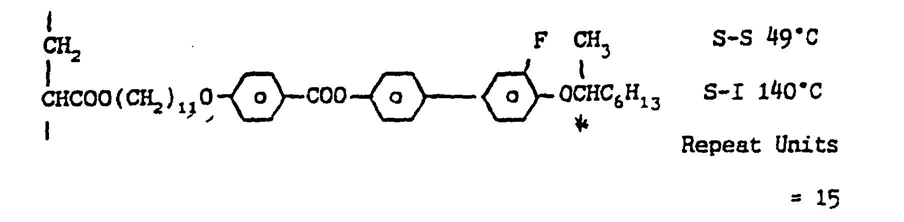

The following polyacrylate copolymer was also prepared using the method of this invention.

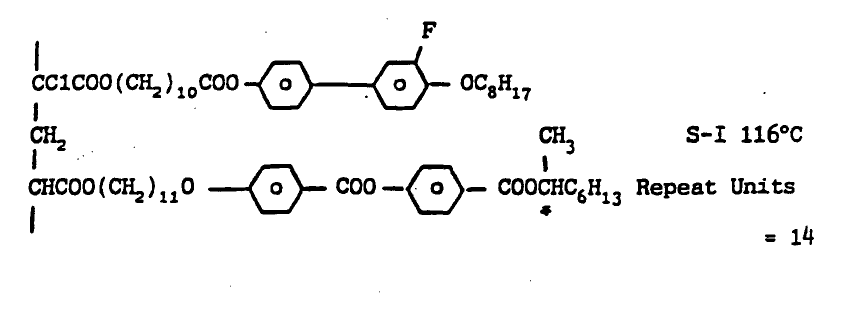

## Claims

1. A liquid crystal polyacrylate homo or co-polymer having a repeat unit I: 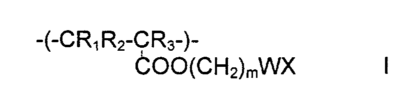 wherein R₁ and R₂ are independently alkyl or hydrogen; R₃ is alkyl, hydrogen or chlorine; m is 0 or an integer 1-20; W is a linkage group COO, OOC or O and X is a mesogenic group of formula IIIA: 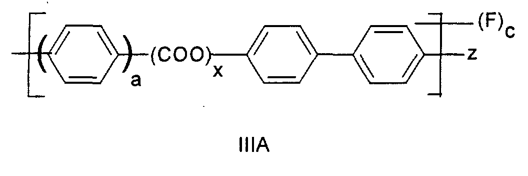 wherein a and x are independently 0 or 1; c is 1 to 4 and the fluorine substituents may occupy any of the substitution positions on the two or three rings and Z is -OR, -OOCR, -COOR where R is an alkyl group having up to 15 carbon atoms which contains an asymmetric centre;
provided that if a=0 then x=0.

2. A liquid crystal polyacrylate polymer according to claim 1 in which the particularly preferred mesogenic group X is of formula IIIA1 to IIIA6:

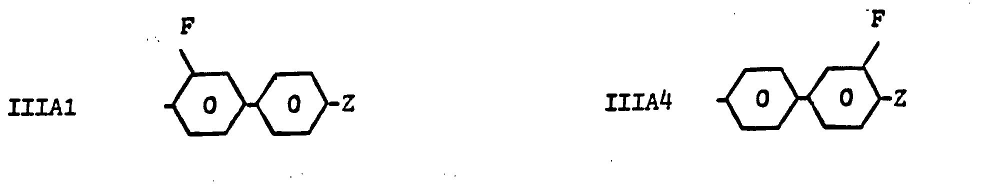

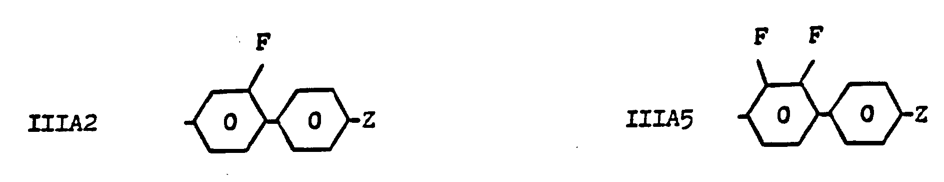

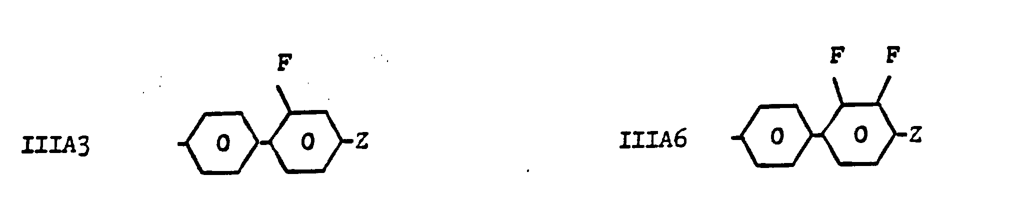

3. A liquid crystal polyacrylate polymer according to claim 1, in which the particularly preferred mesogenic group X is of formula IIIA7 to IIIA9:

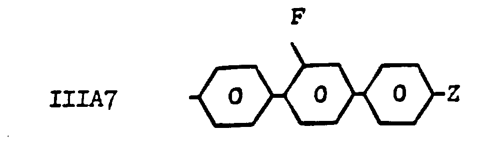

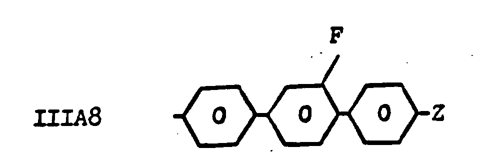

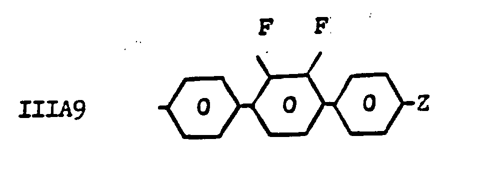

4. A liquid crystal polyacrylate polymer according to claim 1 in which the particularly preferred nosogenic group X is of formula IIIA10 to IIIA13:

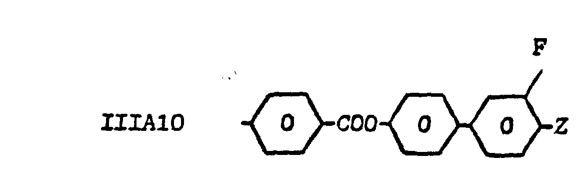

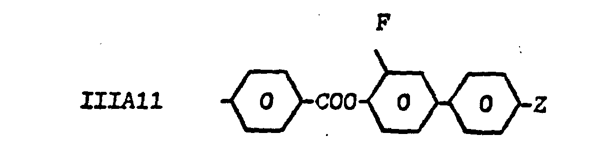

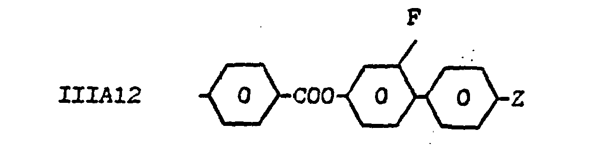

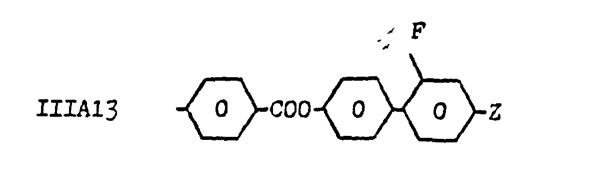

5. A method of preparing liquid crystal polyacrylate polymers having a repeat unit I as defined in claim 1 comprising polymerisation of acrylate ester monomers with a catalyst in a solvent under irradiation or heat conditions.

## Patentansprüche

1. Flüssigkristall-Polyacrylat-Homo- oder -Copolymer, das eine Repetiereinheit I aufweist: 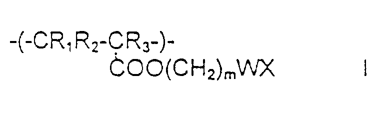 worin R₁ und R₂ unabhängig voneinander Alkyl oder Wasserstoff sind; R₃ Alkyl, Wasserstoff oder Chlor ist; m 0 oder eine ganze Zahl von 1 bis 20 ist; W eine Verknüpfungsgruppe COO, OOC oder O ist und X eine mesogene Gruppe der Formel IIIA ist: 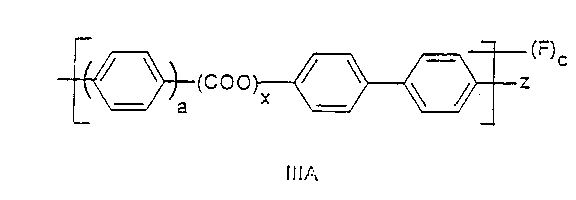 worin a und x unabhängig voneinander 0 oder 1 sind; c 1 bis 4 ist und die Fluor-Substituenten jede der Substitutionspositionen an den zwei oder drei Ringen besetzen können und Z -OR, -OOCR, -COOR ist, worin R eine Alkyl-Gruppe mit bis zu 15 Kohlenstoffatomen ist, die ein asymmetrisches Zentrum enthält, mit der Maßgabe, daß, wenn a=0 ist, x=0 ist.

2. Flüssigkristall-Polycrylat-Polymer nach Anspruch 1, in dem die besonders bevorzugte mesogene Gruppe X eine der Formeln IIIA1 bis IIIA6 hat:

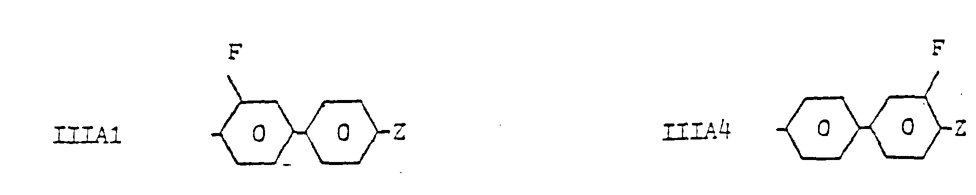

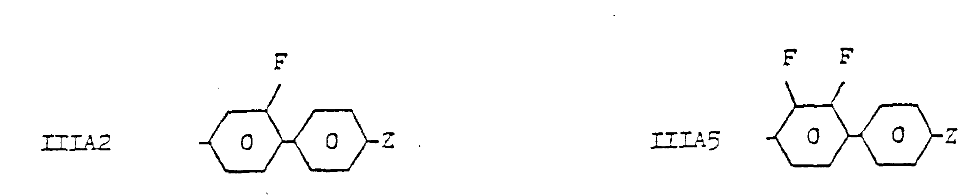

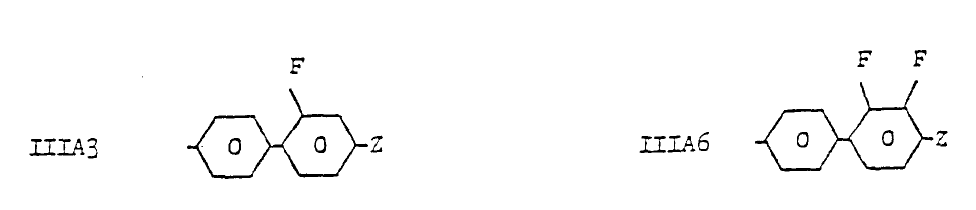

3. Flüssigkristall-Polyacrylat-Polymer nach Anspruch 1, in dem die besonders bevorzugte mesogene Gruppe X eine der Formeln IIIA7 bis IIIA9 hat:

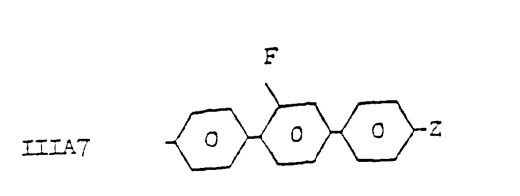

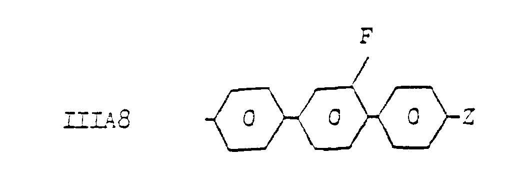

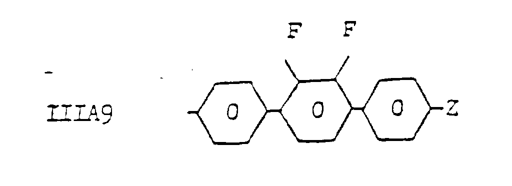

4. Flüssigkristall-Polyacrylat-Polymer nach Anspruch 1, in dem die besonders bevorzugte mesogene Gruppe X eine der Formeln IIIA10 bis IIIA13 hat:

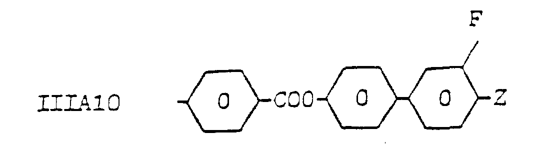

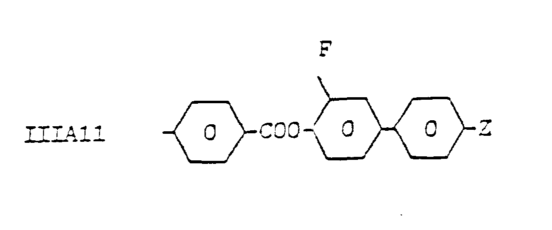

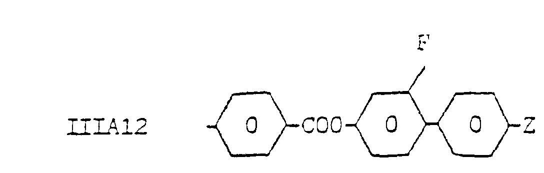

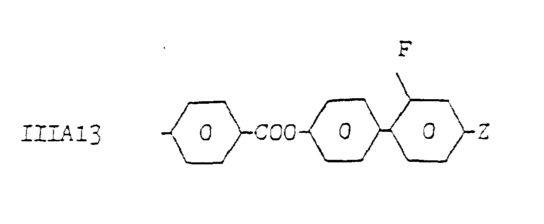

5. Verfahren zur Herstellung von Flüssigkristall-Polyacrylat-Polymeren, die eine in Anspruch 1 definierte Repetiereinheit I haben, das eine Polymerisation von Acrylatester-Monomeren mit einem Katalysator in einem Lösungsmittel unter Bestrahlungs- oder Erwärmung umfaßt.

## Revendications

1. Homopolymère ou copolymère de polyacrylate de cristaux liquides ayant une unité de répétition I : 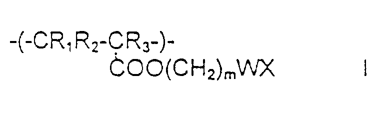 où R₁ et R₂ sont indépendamment de l'alkyle ou de l'hydrogène, R₃ est de l'alkyle, de l'hydrogène ou du chlore, m est égal à 0 ou un nombre entier compris entre 1 et 20, W est un groupe de liaison COO, OOC ou O et X est un groupe mésogénique ayant la formule IIIA : 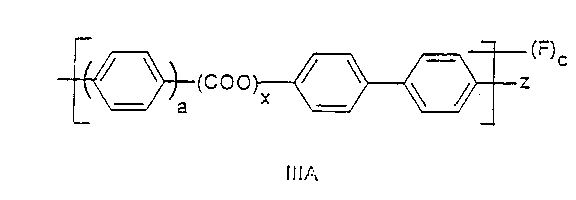 où a et x sont indépendamment égaux à 0 ou 1, c est compris entre 1 et 4 et les substituants fluor peuvent occuper l'une quelconque des positions de substitution sur les deux ou trois anneaux et Z est -OR, -OOCR, -COOR, où R est un groupe alkyle ayant jusqu'à 15 atomes de carbone qui contient un centre asymétrique,
pourvu que si a = 0 alors x = 0.

2. Polymère de polyacrylate de cristaux liquides selon la revendication 1, dans lequel le groupe mésogénique particulièrement préféré X a la formule IIIA1 à IIIA6 :

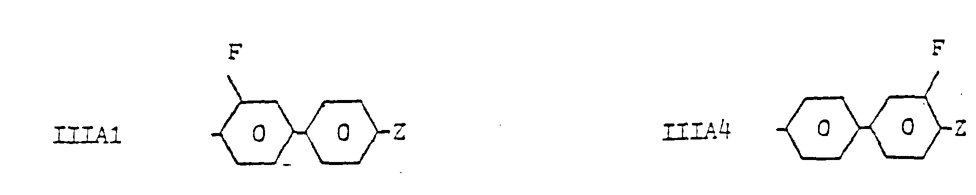

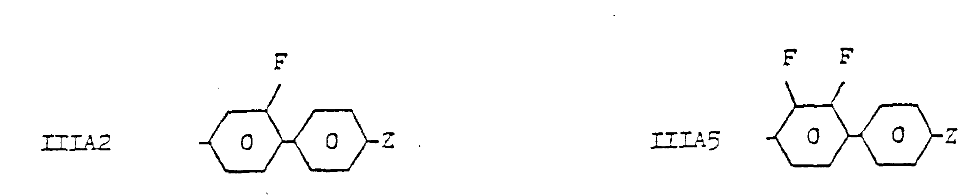

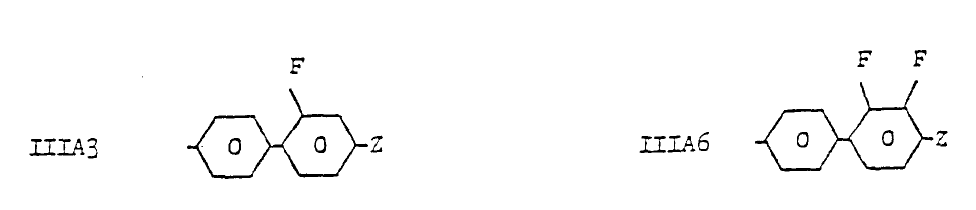

3. Polymère de polyacrylate de cristaux liquides selon la revendication 1, dans lequel le groupe mésogénique particulièrement préféré X a la formule IIIA7 à IIIA9 :

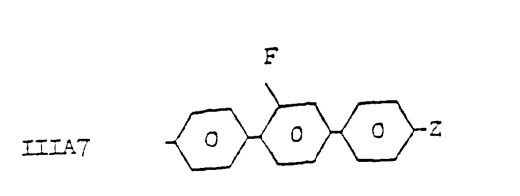

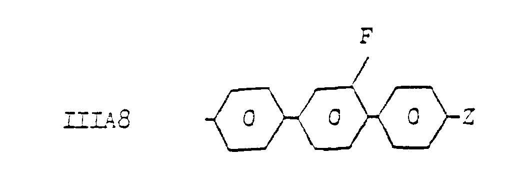

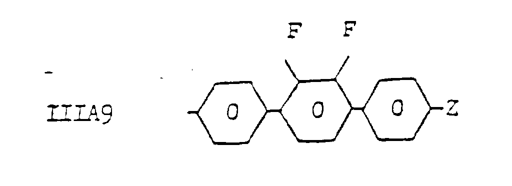

4. Polymère de polyacrylate de cristaux liquides selon la revendication 1, dans lequel le groupe mésogénique particulièrement préféré X a la formule IIIA10 à IIIA13 :

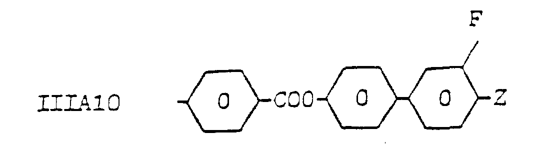

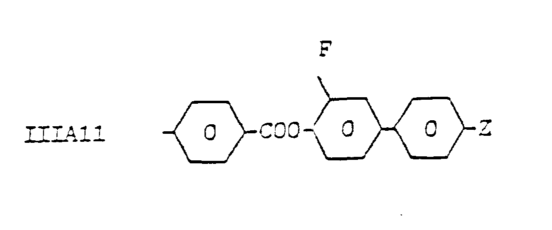

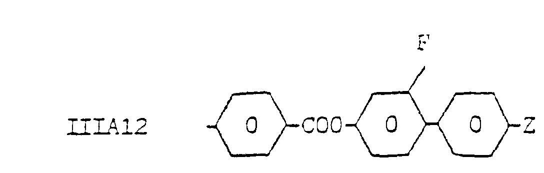

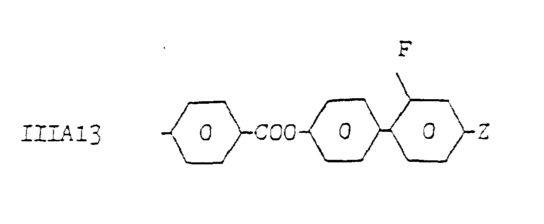

5. Procédé pour préparer des polymères de polyacrylate de cristaux liquides ayant une unité de répétition I telle que définie dans la revendication 1, comportant la polymérisation de monomères d'ester d'acrylate avec un catalyseur dans un solvant sous des conditions d'irradiation ou de chauffage.
